# EUROPEAN PATENT APPLICATION

(11) **EP 4 644 954 A1**
(43) Date of publication of application: **05.11.2025**
(21) Application number: 23910414.4
(22) Date of filing: 22.12.2023
(51) Int. Cl.: G01T 1/202, G01V 5/00, G01N 23/10, G01V 5/226, H01L 27/146

(54) **DETECTOR FOR DETECTING RADIATION**

(30) Priority: 26.12.2022 CN 202211677057
(71) Applicant: NUCTECH COMPANY LIMITED, Beijing 100084 (CN)
(72) Inventor: YAN, Qiang, Beijing 100084 (CN); ZHANG, Jinyu, Beijing 100084 (CN); SUN, Hongbo, Beijing 100084 (CN)
(74) Representative: Cabinet Beau de Loménie
(86) International application number: PCT/CN2023/141121
(87) International publication number: WO 2024/140488

(57) **Abstract**

A detector (200) for detecting radiation, and an imaging device comprising the detector (200). The detector (200) comprises multiple rows of detector crystal layers, the multiple rows of detector crystal layers being used for sequentially detecting the same radiation signal and synthesizing some of radiation signals respectively detected by the multiple rows of detector crystal layers to analyze the characteristics of the radiation signals. The multiple rows of detector crystal layers comprise at least a first row of detector crystal layers and a second row of detector crystal layers. At least the first row of detector crystal layers and the second row of detector crystal layers respectively comprise a first crystal layer (E1) and a second crystal layer (E2), and the layer thicknesses of the first row of detector crystal layers and the second row of detector crystal layers are set such that the total layer thickness of one of the first crystal layer (E1) and the second crystal layer (E2) capable of detecting radiation in a band of interest is greater than the total layer thickness of the other one.

## Description

This application claims priority to Chinese patent Application No. 202211677057.6, filed on December 26, 2022, the content of which is incorporated herein by reference in its entirety.

### TECHNICAL FIELD

The present invention relates to a field of radiation detection, in particular to a detector having a plurality of rows of detector crystals.

### BACKGROUND

The X-ray security inspection device is widely used in civil aviation, trains, docks and other places.

As an important part of the security inspection device, a detector for detecting a ray needs to be optimized continuously to make a detection signal clearer and the radiation resolution ability of different frequency bands more optimized, thereby improving the detection sensitivity and response speed.

Generally, the detector includes a detector crystal and a photoelectric conversion assembly. The detector crystal receives the radiation transmitted through or reflected by an inspected object, and converts the received radiation into an optical signal of visible light or a required wave band, so that the photoelectric conversion assembly further converts the optical signal into an electrical signal, and the radiation is analyzed through the electrical signal, and the result that the radiation is changed by the inspected object is obtained. The internal or external structure or other properties of the inspected object is further analyzed, and the security inspection of the inspected object is completed.

### SUMMARY

The present disclosure provides a detector for detecting radiation, including a plurality of rows of detector crystal layers for sequentially detecting a same radiation signal and combining portions of the radiation signal detected by each of the plurality of rows of detector crystal layers to analyze a characteristic of the radiation signal, where the plurality of rows of detector crystal layers include at least a first row of detector crystal layers and a second row of detector crystal layers, and the at least first row of detector crystal layers and second row of detector crystal layers include a first crystal layer and a second crystal layer, and layer thicknesses of the first row of detector crystal layers and the second row of detector crystal layers are set such that a total layer thickness of one of the first crystal layer and the second crystal layer capable of detecting radiation in a wave band of interest is greater than a total layer thickness of the other of the first crystal layer and the second crystal layer.

In an embodiment, the first row of detector crystal layers includes a first crystal layer for detecting radiation in a first wave band and a second crystal layer for detecting radiation in a second wave band, and the first crystal layer and the second crystal layer are arranged in a stacked manner, where the first wave band and the second wave band are different.

In an embodiment, the second row of detector crystal layers includes one of the first crystal layer and the second crystal layer.

In an embodiment, the second row of detector crystal layers includes a third crystal layer for detecting radiation in a third wave band, and the third wave band is different from the first wave band and the second wave band.

In an embodiment, the second row of detector crystal layers includes a fourth crystal layer for detecting radiation in a fourth wave band, where the fourth crystal layer and the third crystal layer are arranged in a stacked manner, and the fourth wave band is different from the first wave band, the second wave band and the third wave band.

In an embodiment, the plurality of rows of detector crystal layers further include a third row of detector crystal layers, the third row of detector crystal layers includes at least a fifth crystal layer for detecting radiation in a fifth wave band, and the fifth wave band is different from the first wave band, the second wave band, the third wave band and the fourth wave band.

In an embodiment, the first row of detector crystal layers includes a first filtering material for filtering radiation with frequencies between the first wave band and the second wave band.

In an embodiment, the second row of detector crystal layers includes a second filtering material for filtering radiation with frequencies of the first wave band and radiation with frequencies between the first wave band and the second wave band.

In an embodiment, the third row of detector crystal layers includes a third filtering material for filtering the radiation in the first wave band, the radiation in the second wave band and radiation with frequencies between the first wave band and the second wave band, and the radiation in the third wave band, the radiation in the fourth wave band and radiation with frequencies between the third wave band and the fourth wave band.

In an embodiment, a thickness of the second crystal layer of the second row of detector crystal layers is the same as a thickness of the second crystal layer of the first row of detector crystal layers.

In an embodiment, the second crystal layer and the third crystal layer have a same thickness; and/or the second crystal layer and the fourth crystal layer have different thicknesses.

In an aspect of the present disclosure, there is provided an imaging device including the above-mentioned detector.

### BRIEF DESCRIPTION OF THE DRAWINGS

FIG. 1 shows a schematic cross-sectional view of an imaging device according to an embodiment of the present disclosure.
FIG. 2 shows a schematic cross-sectional view of a detector according to an embodiment of the present disclosure.
FIG. 3 shows a schematic cross-sectional view of a detector according to another embodiment of the present disclosure.
FIG. 4 shows a schematic cross-sectional view of a detector according to yet another embodiment of the present disclosure.

### DETAILED DESCRIPTION OF EMBODIMENTS

In order to more clearly explain the objectives, technical solutions, and advantages of the present disclosure, embodiments of the present disclosure will be described in detail below with reference to the accompanying drawings. It should be understood that the following description of embodiments is intended to explain and illustrate the general concept of the present disclosure, and should not be construed as limiting the present disclosure. In the description and the drawings, the same or similar reference signs denote the same or similar parts. For the sake of clarity, the accompanying drawings are not necessarily drawn to scale, and some well-known components and structures may be omitted in the accompanying drawings.

Unless otherwise defined, technical terms or scientific terms used in the present disclosure should be given their ordinary meaning as understood by those of ordinary skill in the art. The use of "first", "second" and the like in the present disclosure is not intended to indicate any order, quantity or importance, but rather is used to distinguish different components. The word "a" or "an" does not exclude a plurality. The word "comprising" or "including", and the like means that the element or object preceding the word comprises the element or object listed after the word and its equivalent, but does not exclude other elements or objects.. The word "connecting" or "connected", and the like is not limited to physical or mechanical connections, but may include electrical connections, whether direct or indirect. "Upper", "lower", "left", "right", "top", "bottom", and the like are merely used to indicate a relative positional relationship, and when the absolute positions of the described objects change, relative position relationships may also change accordingly. When an element such as a layer, a film, a region, or a base substrate is referred to as being "on" or "below" another element, the element may be "directly" "on" or "below" the other element, or there may be an intervening element. "Radiation" and "ray", "beam of rays" may mean X-rays or other rays, for example, gamma rays, and "radiation" and "ray" may sometimes mean the same meaning herein.

Generally, an X-ray security inspection device includes a ray source 100 and a detector 200, and an inspection channel 300 is defined by the ray source 100 and the detector 200, and an inspected object is conveyed on the inspection channel 300.

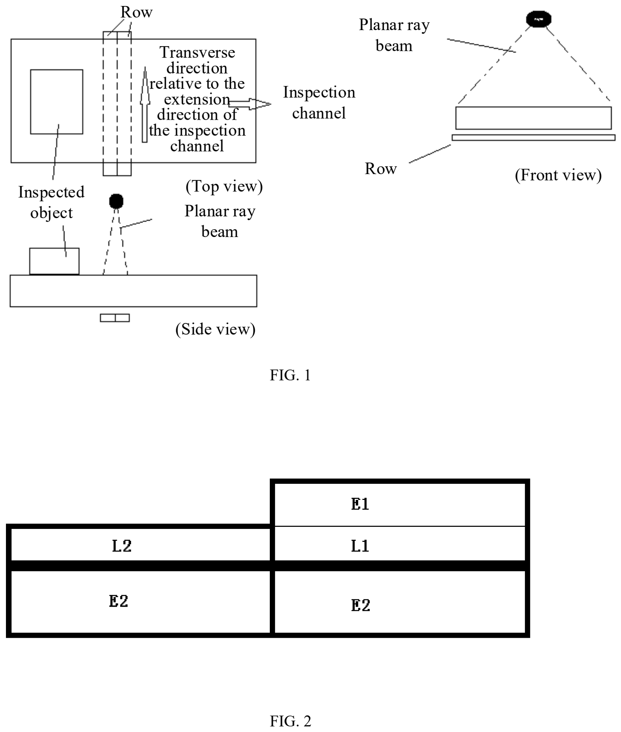

In an embodiment of the present disclosure, as shown in FIG. 1, in a ray inspection device, the ray source 100 and the detector 200 are provided, the ray source 100 emits rays toward the detector 200, and the inspection channel 300 is defined between the ray source 100 and the detector 200. The ray source 100 emits a planar ray beam, for example, by providing a collimator or the like, and the planar ray beam irradiates the detector across the inspection channel 300. FIG. 1 shows that the ray source 100 is located above the inspection channel 300 and the detector is located below the inspection channel 300. However, in another embodiment, the ray source 100 is below the inspection channel 300, and the detector 200 is arranged above the inspection channel 300, for example, supported by an L-shaped or portal-shaped frame. The inspected object passes through the inspection channel 300, and the inspected object is transported from right to left or from left to right as shown in FIG. 1 by a trolley, a conveyor belt and the like. When the inspected object passes through the inspection channel 300, the planar ray beam penetrates through the inspected object by the planar ray beam transversely crossing the inspection passage 300, and the planar ray beam transmitted through the inspected object is received by the detector 200, so as to output a signal. After the inspected object moves through the planar ray beam, the received continuous transmission scanning signals are collected, and the (two-dimensional) transmission image of the inspected object is obtained through computer processing, so as to realize the security inspection of the inspected object or the screening of suspects.

The detector 200 generally includes a scintillator crystal layer and a photodiode. The incident radiation is lost in the scintillator crystal and energy is deposited in the scintillator crystal, which causes ionization excitation of atoms in the scintillator crystal, and then excited particles are de-excited to emit scintillation photons with wavelengths close to visible light. Generally speaking, the scintillator crystal layer converts the rays into optical signals with specific wavelengths. The converted optical signal is converted into an electrical signal by a photodiode, and the detector 200 outputs the electrical signal, thereby obtaining an image through a computer or a specific device.

In the present disclosure, the scintillator crystal may include a conventional scintillator crystal, such as an inorganic scintillator including, for example, an alkali metal halide crystals such as sodium iodide, cesium iodide, and the like, as well as CdWO4, BGO, vitreous body, and the like, and an organic scintillator including, for example, anthracene and other organic substances.

Hereinafter, for the sake of brief explanation, a photodiode is not mentioned in the detector 200. However, it should be understood that the detector 200 includes the photodiode. The detector 200 includes a scintillator crystal layer of the detector 200, which is called detector crystal layer or crystal layer for simplicity. Different crystal layers may be made of different scintillators, and different crystal layers are distinguished by first, second, third, fourth or fifth. It should be understood that the first, second, third, fourth or fifth are not meant to indicate the importance and order of the detector crystal layers, but only to indicate the different crystal layers of the detector. Different crystal layers of the detector have different absorption characteristics of rays, that is, different crystal layers of the detector absorb rays of different wave bands and convert the absorbed rays into optical signals or near visible light signals. The thickness of the crystal layer of the detector is related to the amount of radiation absorbed. When the crystal layer is thicker, the integrated intensity of the final output signal is stronger. In the present disclosure, the layer thickness may be understood as the layer thickness of the crystal layer, the crystal layer is basically uniform in thickness, and the detector crystal layer may include crystal layers of different materials. And it should be noted that the detector crystal herein should not be understood as the same as the photodiode.

As shown in FIG. 1, the detector 200 is arranged below the inspection channel 300 and spans the inspection channel 300 in a transverse direction relative to the extension direction of the inspection channel 300, while the ray source 100 is arranged above the inspection channel 300, and the planar ray beam emitted by the ray source 100 is irradiated toward the inspection channel 300, and the plane extension direction of the planar ray beam is parallel to the transverse direction relative to the extension direction of the inspection channel 300, in other words, as shown in FIG. 1, the planar ray beam cuts through the inspection channel 300 in the transverse direction relative to the inspection channel 300. In FIG. 1, the extension direction of the inspection channel 300 is indicated by an arrow. However, the transported direction of the inspected object may be from left to right or from right to left.

In the embodiment, the planar ray beam means that when the ray beam irradiates the inspection channel 300, the planar ray beam covers a narrow rectangular area in the transverse direction relative to the extension direction of the inspection channel 300. The front view and top view in FIG. 1 show the general shape of the planar ray beam. Seen from the front view, the planar ray beam has a sector shape starting from the ray source 100. As can be seen from the side view, the planar ray beam covers a limited width in the extension direction of the inspection channel 300. In FIG. 1, the irradiation amplitude of the planar ray beam is schematically shown as covering the detector 200.

According to an embodiment of the present disclosure, the detector 200 for detecting radiation includes a plurality of rows of detector crystal layers. The direction of the "row" here is the direction extending in the transverse direction relative to the inspection channel 300 as shown in the front view in FIG. 1. A row of detector crystal layers may include a plurality of detector units, which may be closely arranged or spaced apart. A row of detector crystal layers may receive the planar ray beam, thereby outputting the detection signal, and calculating the image of the transmitted signal through a configured algorithm.

As shown in FIG. 2, FIG. 2 shows a schematic cross-sectional view of one embodiment of a detector 200, that is, a cross-sectional view of a row of the detector 200. In the embodiment, the detector 200 for detecting radiation includes two rows of detector crystal layers, i.e., the first row of detector crystal layers located on the right side of FIG. 2 and the second row of detector crystal layers located on the left side of FIG. 2, the first row of detector crystal layers and the second row of detector crystal layers have different layer thicknesses. The detector 200 is arranged below the inspection channel 300, across the inspection channel 300. When the inspected object is transported on the inspection channel 300, the inspected object moves from right to left (or from left to right) on the inspection channel 300, and the planar ray beam is first transmitted through the first part of the inspected object and then received by the first row of detector crystal layers (on the right). Then the inspected object moves above the second row of detector crystal layers, and the planar ray beam transmitted through the first part of the inspected object is received by the second row of detector crystal layers.

That is, as the inspected object moves from right to left, the first row of detector crystal layers and the second row of detector crystal layers sequentially detect the same planar ray beam (both of which are transmitted through the first part of the inspected object, followed by other parts of the inspected object). The radiation signals received by the first row of detector crystal layers and the second row of detector crystal layers are sent to the computer, so as to obtain the relevant information of the first part of the inspected object. Therefore, the transmission image of the inspected object may be obtained.

As shown in FIG. 2, the first row of detector crystal layers includes a first crystal layer E1 and a second crystal layer E2. The first crystal layer E1 is used for detecting radiation in the first wave band, the second crystal layer E2 is used for detecting radiation in the second wave band, and the first crystal layer E1 and the second crystal layer E2 are arranged in a stacked manner. The first crystal layer E1 and the second crystal layer E2 may also be realized by using different materials, so that the first crystal layer E1 and the second crystal layer E2 may respectively detect radiation in different wave bands. The radiation part in the first wave band in the planar ray beam transmitted through the inspected object is detected by the first crystal layer E1, and the radiation part in the second wave band in the planar ray beam transmitted through the inspected object is detected by the second crystal layer E2. The radiation signal detected by the first crystal layer E1 and the radiation signal detected by the second crystal layer E2 respectively reflect the distribution of substances with different properties in the inspected object, thus combining their signals may provide more abundant information about the inspected object, for example, using multi-energy spectrum to realize the discrimination of substance properties and improve the recognition rate of foreign objects (such as suspects). In the embodiment, two different crystal layers are arranged in the single-row detector crystal layers to cover two different radiation bands, for example, the radiation in the high-energy band and the low-energy band is covered respectively, so as to realize the conversion from the rays of two energy spectra to visible light, and the signal is transmitted to a processing circuit or a computer for further processing through signal acquisition, amplification and A/D conversion, so that the recognition rate of foreign objects of the single-row detector crystal layers may be improved (for example, wider atomic coefficient recognition ability).

Furthermore, in the embodiment, the second row of detector crystal layers includes one of the first crystal layer E1 and the second crystal layer E2. In the embodiment shown in FIG. 2, the second row of detector crystal layers includes the second crystal layer E2. In the embodiment, the planar ray beam passing through the first part of the inspected object is first received by the first row of detector crystal layers, and then the inspected object is conveyed above the second row of detector crystals, and the planar ray beam passing through the first part of the inspected object is received by the second row of detector crystal layers.

In an embodiment of the present disclosure, the detector includes a first row of detector crystal layers and a second row of detector crystal layers, which are combined together, for example, arranged side by side, where the first row of detector crystal layers includes a first crystal layer E1 and a second crystal layer E2, and the second row of detector crystal layers includes one of the first crystal layer E1 and the second crystal layer E2, for example, as shown in FIG. 2, the second row of detector crystal layers includes the second crystal layer E2. In the embodiment, the detector includes the first crystal layer E1 and two second crystal layers E2, and the total layer thickness of the second crystal layer E2 is the sum of the layer thickness of the second crystal layer E2 in the first row of detector crystal layers and the layer thickness of the second crystal layer E2 in the first row of detector crystal layers. In the embodiment, the total layer thickness of the second crystal layer is greater than the total layer thickness of the first crystal layer. When in use, the detected radiation signal corresponding to the wave band of the second crystal layer will be stronger, and the contrast between signals corresponding to different wave bands will be more obvious during imaging and the imaging will be clearer.

In another embodiment of the present disclosure, the first row of detector crystal layers of the detector includes the first crystal layer E1 and the second crystal layer E2, and the second row of detector crystal layers includes the first crystal layer E1. In the embodiment, the total layer thickness of the second crystal layer E2 is greater than the total layer thickness of the first crystal layer E1. The first crystal layer E1 and the second crystal layer E2 detect the radiation in corresponding wave bands, and according to the embodiment of the present disclosure, the relative layer thicknesses of the two may be set as required. As for the detector, the signals detected by the first row of detector crystal layers and the second row of detector crystal layers come from the same radiation signal, thus the signals detected by the first crystal layer E1 and the second crystal layer E2 may be integrated, that is, the signals detected by the first row of detector crystal layers and the second row of detector crystal layers may be combined to analyze the characteristics of the radiation signal, for example, the radiation signal reflects attenuation characteristics after transmission through the inspected object, or for example, the radiation signal reflects diffraction or scattering characteristics of the surface layer of the inspected object.

In an embodiment, the ray signal received by the second crystal layer E2 of the first row of detector crystal layers is combined with the ray signal received by the second crystal layer E2 of the second row of detector crystal layers, so that the ray signal received by the second crystal layer E2 in all imaging signals is enhanced, that is, the detected signal of the second wave band is enhanced in all detected signals, so that the signal-to-noise ratio of the detector 200 is enhanced. When the radiation in the wave band corresponding to the second crystal layer E2 is attenuated to a greater extent than the radiation in the wave band corresponding to the first crystal layer E1, the signal detected by the second crystal layer E2 is weak in the transmission image, which makes the display of the corresponding substances not obvious and the recognition degree decreased. In the embodiment, the signal detected by the second crystal layer E2 is enhanced because of the addition of the second crystal layer of the second row of detector crystal layers, so that the substance related to the radiation absorption of the second wave band is characterized more strongly in the final transmission image.

Further, due to the sequential arrangement of the first row of detector crystal layers and the second row of detector crystal layers, even if the inspected object is transported quickly, the transmitted radiation of the same part of the inspected object is collected twice by the second crystal layer E2 with the same thickness (or different thickness), so that the absorption time is prolonged. The signal transmitted through the difficult-to-penetrate part (for example, corresponding to the second crystal layer E2) may be enhanced through integral calculation, thus the influence caused by the inconsistency of the second layer detection crystal E2 in different rows with the same thickness is weakened, which is especially beneficial to difficult-to-penetrate substances, avoids the unevenness with the transmission signal of the easy-to-penetrate part (for example, corresponding to the first crystal layer E1), and even the integrated intensity of the weak transmission radiation may meet the resolution requirement of foreign objects, thereby increasing the detection accuracy of the detector 200, improving the identification rate, enhancing the signal-to-noise ratio and improving the efficiency of the entire inspection system.

The arrangement of the detector 200 in the embodiment may realize the imaging processing of the transmitted radiation by time-delay integration. In the case of high-speed inspection, the movement speed of the inspected object is faster, and this time-delay integration imaging arrangement may especially reduce the non-uniformity and random fluctuation between pixels, so as to improve the imaging clarity.

In the embodiment, the second crystal layer E2 of the first row of detector crystal layers and the second crystal layer E2 of the second row of detector crystal layers may have the same thickness. In the embodiment, the signals detected by the first row of detector crystal layers and the second row of detector crystal layers may not be processed in combination, but may be processed as separate signals. In the embodiment, the detection signal provided by the second crystal layer E2 of the second row of detector crystal layers corresponds to the radiation in the second wave band, which independently displays the information of the corresponding substance. Since there is no influence of radiation signals in other wave bands, the contrast of the scan image obtained by the movement of the inspected object will not be affected by the signals of other wave bands, and more accurate display of foreign objects may be realized by combining the scan images corresponding to the first row of detector crystal layers and the second row of detector crystal layers.

In an embodiment, as shown in FIG. 2, in the first row of detector crystal layers, a first filtering material is further arranged between the first crystal layer E1 and the second crystal layer E2, and the first filtering material is used for filtering radiation with frequencies between the first wave band and the second wave band. The arrangement of the first filtering material greatly reduces the radiation signal noise detected by the first crystal layer E1 and the second crystal layer E2 in the first row of detector crystal layers, which is beneficial to forming a transmission image more efficiently and clearly.

In an embodiment, as shown in FIG. 2, in the second row of detector crystal layers, the second crystal layer E2 and a second filtering material are provided. The second filtering material may filter the radiation with frequencies in the first wave band and/or the radiation with frequencies between the first wave band and the second wave band, so that when the transmitted radiation passes through the second row of detector crystal layers, the radiation with the frequencies outside the second wave band is greatly reduced, and the noise of the detection signal of the second crystal layer E2 is greatly reduced, and the signal-to-noise ratio of the detector 200 is further improved. When the signal detected by the second crystal layer E2 is used alone for imaging, the noise of the image is greatly reduced, the contrast of the image is improved, and the recognition rate of foreign objects is improved.

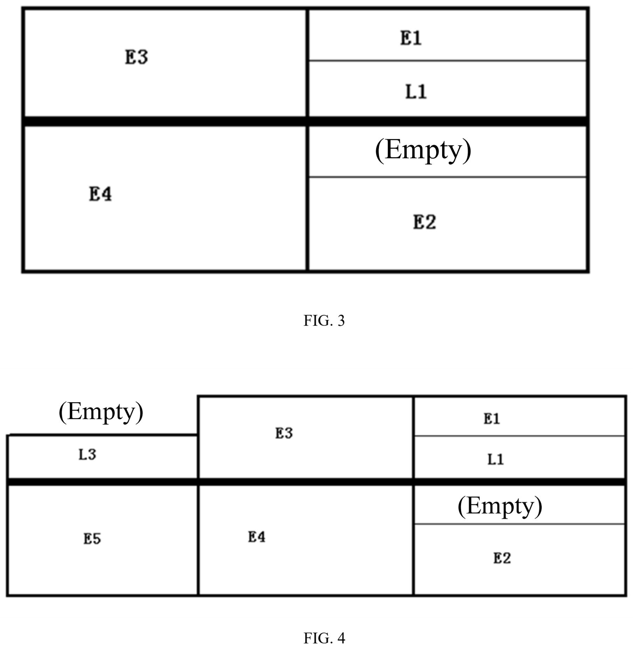

As shown in FIG. 3, in an embodiment of the present disclosure, unlike the embodiment shown in FIG. 2, the second row of detector crystal layers includes a third crystal layer E3 for detecting radiation in a third wave band. In the embodiment, the second row of detector crystal layers may further include a fourth crystal layer E4 for detecting radiation in a fourth wave band, and the fourth crystal layer E4 and the third crystal layer E3 are arranged in a stacked manner.

In the embodiment, the third crystal layer E3 for detecting the radiation in the third wave band and the fourth crystal layer E4 for detecting the radiation in the fourth wave band are added, so that the radiation wave band that may be detected by the detector 200 is greatly broadened, and the planar ray beam transmitted through the inspected object is received by the first crystal layer E1, the second crystal layer E2, the third crystal layer E3 and the fourth crystal layer E4, and output signals are respectively generated for constructing transmission scan images, and may also be synthesized and converted into the transmission image of the inspected object.

The thickness of the third crystal layer E3 and the fourth crystal layer E4 of the detector 200 of the embodiment is increased, which is more favorable for detecting the signal transmitted by the difficult-to-penetrate substances. Since the detector 200 of the embodiment includes the first crystal layer E1, the second crystal layer E2, the third crystal layer E3 and the fourth crystal layer E4, the detector 200 may detect radiation in a wider band, and may be used together with, for example, a high-energy ray source 100 and a low-energy ray source 100 at the same time, so that the setting of the device may be simplified, the volume may be reduced, and since it is easy to realize that the first crystal layer E1, the second crystal layer E2, the third crystal layer E3, and the fourth crystal layer E4 detect the transmission signals of the same part of the detected object, the accuracy of image contrast is improved.

FIG. 4 shows another embodiment according to the present disclosure, which is different from the embodiment shown in FIG. 3 in that the plurality of rows of detector crystal layers further include a third row of detector crystal layers, and the third row of detector crystal layers includes at least a fifth crystal layer E5 for detecting radiation in a fifth wave band. In the embodiment, the fifth crystal layer E5 for detecting radiation in the fifth wave band is added, thus the radiation wave band that the detector 200 may detect is further broadened, and the planar ray beam transmitted through the inspected object is received by the first crystal layer E1, the second crystal layer E2, the third crystal layer E3, the fourth crystal layer E4 and the fifth crystal layer E5, and the output signals are respectively generated, and are synthesized and converted into the transmission image of the inspected object.

In the present disclosure, the first crystal layer E1, the second crystal layer E2, the third crystal layer E3, the fourth crystal layer E4, and the fifth crystal layer E5 may respectively detect the radiation in their corresponding wave bands by using different materials.

The detector 200 of the embodiment may detect radiation in a wider band, and may be used together with, for example, the high-energy ray source 100 and the low-energy ray source 100 at the same time, so that the setting of the device may be simplified and the volume may be reduced, and since it is easy to realize that the first crystal layer E1, the second crystal layer E2, the third crystal layer E3, the fourth crystal layer E4 and the fifth crystal layer E5 detect the transmission signals of the same part of the detected object, the accuracy of image contrast is improved.

In the embodiment shown in FIG. 4, the third row of detector crystal layers includes a third filtering material for filtering the radiation in the first wave band, the radiation in the second wave band and the radiation with frequencies between the first wave band and the second wave band, and the radiation in the third wave band, the radiation in the fourth wave band and radiation with frequencies between the third wave band and the fourth wave band. Since the third filtering material filters other radiation, the proportion of irrelevant radiation in the radiation absorbed by the fifth crystal layer E5 is reduced, and the noise caused by irrelevant radiation is reduced. The material information related to the fifth wave band radiation in the transmission image constructed by using the signal converted by the fifth crystal layer E5 alone is more recognizable, and the contrast of the transmission image is improved.

In an embodiment, such as the embodiment shown in FIG. 3, the second crystal layer E2 and the third crystal layer E3 have the same thickness. By providing the second crystal layer E2 and the third crystal layer E3 with the same thickness, the second crystal layer E2 and the third crystal layer E3 respectively absorb the transmitted radiation and generate signals. Under the condition of the same thickness, the signals generated by the two are combined in a transmission image, so that the contrast may be formed more conveniently and the recognition degree of foreign objects may be improved.

In an embodiment, such as the embodiment shown in FIG. 3, the second crystal layer E2 and the fourth crystal layer E4 have different thicknesses. In the embodiment, the substance corresponding to the radiation in the fourth wave band has a strong blocking effect on the radiation, the radiation in the fourth wave band is attenuated seriously after being transmitted through the inspected object, and the signal detected and converted by the fourth crystal layer E4 is relatively weak. According to the embodiment, the fourth crystal layer E4 has a larger thickness, and the specific setting may be determined according to factors such as the kind of substance and the sensitivity of the detector. By setting a suitable larger thickness of the fourth crystal layer E4, the signal generated by the fourth crystal layer E4 is equivalent to other signals used together to form the transmission scan image, thereby improving the accuracy of the difficult-to-penetrate part in the transmission scan image.

In the present disclosure, the radiation in the first wave band, the second wave band, the third wave band, the fourth wave band, the fifth wave band and even more bands are covered, and the above terms are used to express the frequencies of different bands, which does not mean the order of the frequencies of the bands, and the frequencies of these different bands are not necessarily continuous or have other correlations, and they are only used to represent a portion of the frequency range within the overall frequency range of the radiation.

Various embodiments of the present disclosure are not intended to limit the principles or structures of the present disclosure, but rather to assist in understanding the principles and technical solutions of the present disclosure. Those skilled in the art, after reading the embodiments of the present disclosure, may conceive of other embodiments not recited in the present disclosure. These embodiments not described in the present disclosure should also be considered as included in the present disclosure. Furthermore, the embodiments of the present disclosure and the embodiments not described in the present disclosure can be combined to obtain other implementations of the present disclosure. The scope of the present disclosure should be defined by the claims.

## Claims

1. A detector for detecting radiation, comprising a plurality of rows of detector crystal layers for sequentially detecting a same radiation signal and combining portions of the radiation signal detected by each of the plurality of rows of detector crystal layers to analyze a characteristic of the radiation signal,
wherein the plurality of rows of detector crystal layers comprise at least a first row of detector crystal layers and a second row of detector crystal layers, and the at least first row of detector crystal layers and second row of detector crystal layers comprise a first crystal layer and a second crystal layer, and
layer thicknesses of the first row of detector crystal layers and the second row of detector crystal layers are set such that a total layer thickness of one of the first crystal layer and the second crystal layer capable of detecting radiation in a wave band of interest is greater than a total layer thickness of the other of the first crystal layer and the second crystal layer.

2. The detector according to claim 1, wherein,
the first row of detector crystal layers comprises a first crystal layer for detecting radiation in a first wave band and a second crystal layer for detecting radiation in a second wave band, and the first crystal layer and the second crystal layer are arranged in a stacked manner, wherein the first wave band and the second wave band are different.

3. The detector according to claim 2, wherein,
the second row of detector crystal layers comprises one of the first crystal layer and the second crystal layer.

4. The detector according to claim 2, wherein,
the second row of detector crystal layers comprises a third crystal layer for detecting radiation in a third wave band, and the third wave band is different from the first wave band and the second wave band.

5. The detector according to claim 4, wherein,
the second row of detector crystal layers comprises a fourth crystal layer for detecting radiation in a fourth wave band, wherein the fourth crystal layer and the third crystal layer are arranged in a stacked manner, and the fourth wave band is different from the first wave band, the second wave band and the third wave band.

6. The detector according to claim 5, wherein,
the plurality of rows of detector crystal layers further comprise a third row of detector crystal layers, the third row of detector crystal layers comprises at least a fifth crystal layer for detecting radiation in a fifth wave band, and the fifth wave band is different from the first wave band, the second wave band, the third wave band and the fourth wave band.

7. The detector according to claim 2, wherein,
the first row of detector crystal layers comprises a first filtering material for filtering radiation with frequencies between the first wave band and the second wave band.

8. The detector according to claim 3, wherein,
the second row of detector crystal layers comprises a second filtering material for filtering radiation with frequencies of the first wave band and radiation with frequencies between the first wave band and the second wave band.

9. The detector according to claim 6, wherein,
the third row of detector crystal layers comprises a third filtering material for filtering the radiation in the first wave band, the radiation in the second wave band and radiation with frequencies between the first wave band and the second wave band, and the radiation in the third wave band, the radiation in the fourth wave band and radiation with frequencies between the third wave band and the fourth wave band.

10. The detector according to claim 3, wherein,
a thickness of the second crystal layer of the second row of detector crystal layers is the same as a thickness of the second crystal layer of the first row of detector crystal layers.

11. The detector according to claim 5, wherein,
the second crystal layer and the third crystal layer have a same thickness; and/or
the second crystal layer and the fourth crystal layer have different thicknesses.

12. An imaging device comprising a detector according to any one of claims 1 to 11,
wherein the imaging device comprises an imaging channel, and the detector spans an inspection channel in a transverse direction.
